# EUROPÄISCHE PATENTANMELDUNG

(11) **EP 2 469 364 A1**
(43) Veröffentlichungstag der Anmeldung: **27.06.2012**
(21) Anmeldenummer: 10196710.7
(22) Anmeldetag: 23.12.2010
(51) Int. Cl.: G05B 19/05

(54) **Verfahren zum Erkennen eines Programmablaufs**

(71) Anmelder: Siemens Aktiengesellschaft, 80333 München (DE)
(72) Erfinder: Wagner, Peter, 91217 Hersbruck (DE); Horn, Wolfgang, Dr., 09337 Hohenstein-Ernstthal (DE); Singer, Jörg, 09112 Chemnitz (DE)

(57) **Zusammenfassung**

Gemäß eines Verfahrens zur Darstellung eines Programmablaufes, wird ein Programm graphisch als Ablaufdiagramm (1) dargestellt, wobei Elemente (3,4,5,6,7,8,9,10,11,15,16) des Ablaufdiagramms (1) abhängig von Zustandsdaten des ablaufenden Programms oder des abgelaufenen Programms markiert werden.

## Beschreibung

Die Erfindung betrifft das Erkennen eines Programmablaufs, insbesondere eines Programms in der Automatisierungstechnik. Die Erkennung des Programmablaufs kann graphisch dargestellt werden. Das Programm ist insbesondere ein zyklisch abarbeitbares Programm einer Automatisierungseinrichtung. Beispiele für Automatisierungseinrichtungen sind: Speicherprogrammierbare Steuerungen (SPS), Bewegungssteuerungen (insbesondere zur Regelung und/oder Steuerung von Bewegungsabläufen), Stromrichter, Leitrechner (z.B. für Druckmaschinen), z.B. für Fertigungsbänder, Stahlwerke, Werkzeugmaschinen, Verpackungsmaschinen, Glasformungsmaschinen, usw. Programme können auf derartigen Einrichtungen ablaufen, und sind beispielsweise mittels eines Engineeringsystems programmiert. Anwenderprogramme einer Werkzeugmaschine kommen dann beispielsweise auf einem Runtimesystem der Werkzeugmaschine zum Einsatz.

Für einen Anwender des Automatisierungssystems, z.B. einem Bediener oder Programmierer ist es wichtig, den Ablauf des Programms erkennen zu können. Hierzu kann ein Debugger verwendet werden. Nachteilig dabei ist zum Beispiel, dass durch Haltepunkte der Programmablauf angehalten wird, bzw. dass dem Anwender lediglich abgespeicherte alphanumerische Programmwerte für eine Analyse zur Verfügung stehen. Einem Anwender ist es bei einem ST-Programm (Programm, das in Structured Text geschrieben ist) beispielsweise möglich, einen DEBUG-Mechanismus zu aktivieren. In einem ersten Darstellungsfester wird ihm die ST-Quelle dargestellt und in einem weiteren Fenster können für einen zyklisch durchlaufenen Programmcode die Werte der im Programmcode verwendeten Variablen konsistent für den jeweiligen Durchlauf angezeigt werden. Damit kann der Anwender bei zyklischer SPS-Funktionalität Diagnose und Programm-Debug in textueller Form realisieren. Obgleich neben einer ST-Programmierung auch eine auf graphischen Objekten basierende Programmierung möglich ist, basiert eine Debug-Funktion auf textuellen Darstellungen.

Eine Aufgabe der vorliegenden Erfindung ist es ein verbessertes Erkennen eines Programmablaufs zu ermöglichen, und einem Anwender die Analyse zu erleichtern.

Eine Lösung der Aufgabe ergibt sich gemäß eines Verfahrens, welches Merkmale nach einem der Ansprüche 1 bis 9 aufweist.

Das Automatisierungssystem weist insbesondere eine Vorrichtung zum Parametrieren, Projektieren und Inbetriebnehmen von Steuerungssystemen und/oder zum Erstellen von vorzugsweise zyklischen Steuerungsprogrammen mit einer Editoreinrichtung zum Editieren eines Steuerungsprogramms und insbesondere eine Compilereinrichtung zum Kompilieren des Steuerungsprogramms auf. Hierfür kann ein Engineeringsystem eingesetzt werden. Das Automatisierungssystem kann zur zeitlichen Steuerung eines Systems auf der Grundlage eines Steuerungsprogramms eine Mikroprozessoreinrichtung zur Abarbeitung eines kompilierten, vorzugsweise zyklischen Steuerungsprogramms aufweisen.

Bei speicherprogrammierbaren Steuerungen wird vielfach das Engineeringsystem dazu verwendet, um ein Steuerungssystem zu debuggen, parametrieren und in Betrieb zu nehmen, sowie geeignete Steuerungsprogramme zu erstellen. Das Runtimesystem wird beispielsweise dazu verwendet, um die Daten des Engineeringsystems aufzunehmen und die Steuerungsprogramme entsprechend abzuarbeiten. Das Runtimesystem kann dabei mit dem Engineeringsystem auch im Betrieb der Automatisierungseinrichtung in einer Kommunikationsverbindung stehen. So können Daten während des Ablaufs des Programms im Engineeringsystem angezeigt, verarbeitet und/oder gespeichert werden. Zur Speicherung können das Runtimesystem und/oder das Engineeringsystem einen Trace aufweisen. Das Enginierungsystem kann auf der gleichen Hardware wie das Runtimesystem installiert sein oder auch auf einer von diesem getrennten Hardware.

Insbesondere bei zyklisch ablaufenden Steuerungsprogrammen kann das Beobachten von Variablen, Programmzuständen, und Befehlsabarbeitungen vorteilhaft mittels einer graphischen Darstellung erfolgen. Diese graphische Darstellung basiert dabei insbesondere auf einem Ablaufdiagramm. Der Anwender kann den Programmablauf auf einem Monitor verfolgen und z.B. sehen, wie ein SPS-Zyklus abläuft. Damit ist ein Beobachten von Systemparametern während des Laufs eines Steuerungsprogramms komfortabel durchführbar. Das Ablaufdiagramm ist allgemein betrachtet auch eine Darstellung einer graphischen Programmierschnittstelle, welche sich nicht alleine auf ASCII Code stützt, sondern graphisch unterstützt ist.

In einer Ausgestaltung eines Verfahrens zur Darstellung eines Programmablaufes wird das Programm graphisch als Ablaufdiagramm dargestellt, wobei Elemente des Ablaufdiagramms abhängig von Zustandsdaten des ablaufenden Programms oder des abgelaufenen Programms markiert werden. Dies basiert auf Informationen, welche vom Runtimesystem geliefert werden können. Das Programm ist beispielsweise ein Steuerungsprogramm einer Werkzeugmaschine, ein Teileprogramm einer Werkzeugmaschine, ein Steuerungsprogramm einer Produktionsmaschine, ein Steuerungsprogramm einer Verpackungsmaschine, ein Steuerungsprogramm einer Druckmaschine, usw.

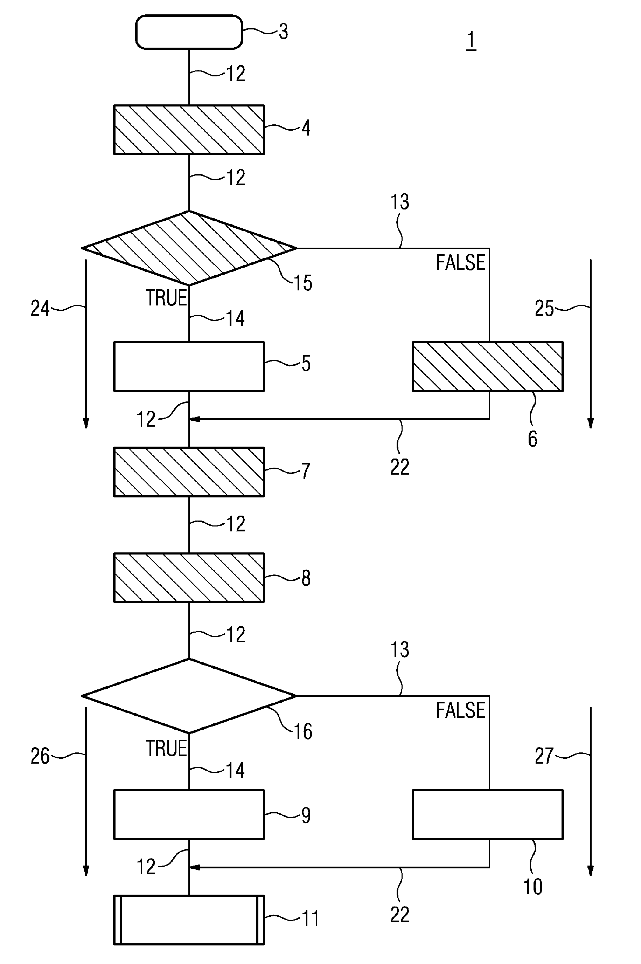

Das Ablaufdiagramm ist ein Programmablaufplan (PAP) der auch als Flussdiagramm (flowchart) oder Programmstrukturplan bezeichnet werden kann. Mit Hilfe einer graphischen Darstellung kann eine Umsetzung eines Algorithmus in einem Computerprogramm erfolgen. Computerprogramme im weiteren Sinne sind dabei Programme, welche beispielsweise auf Steuerungseinrichtungen (z.B. Speicherprogrammierbare Steuerungen (SPS)) oder Regelungseinrichtungen (z.B. Bewegungssteuerungen) in industriellen Anlagen auf Prozessoren ablaufen. Durch die graphische Darstellung kann in anschaulicher Weise eine Folge von Operationen zur Lösung einer Aufgabe beschrieben sein. Mögliche Symbole für Elemente in Programmablaufplänen sind beispielsweise in der DIN 66001 beschrieben. Dort sind auch Symbole für Datenflusspläne als eine weitere Art von Ablaufdiagramm definiert. Programmablaufpläne können auch unabhängig von Computerprogrammen zur Darstellung von Prozessen und Tätigkeiten eingesetzt werden. Ein weiteres Beispiel für ein Ablaufdiagramm ist ein Nassi-Shneiderman-Diagramm (Struktogramm). Auch bei der Abbildung objektorientierter Programmkonzepte durch UML finden erweiterte Ablaufdiagramme Anwendung. Aus der ISO 5807 Informationsverarbeitung sind Symbole und Konventionen für Ablaufdiagramme beschrieben.

Als Ablaufdiagramm dargestellte Programme sind beispielsweise unter zu Hilfenahme einer graphischen Programmieroberfläche geschrieben worden, also bereits im Sinne eines Ablaufdiagramms vorhanden. Es ist auch möglich, dass Programme textuell erstellt werden, um danach in einem Ablaufdiagramm graphisch dargestellt zu werden. Auch ein in KOP (Kontaktplan) oder FUP (Funktionsplan) geschriebenes Programm kann in einem Ablaufdiagramm beschrieben werden. Derartige Programme werden in Maschinensprache übersetzt, wobei vorgesehen ist, dass beim Ablauf des Programms auf der Maschine Daten erzeugt werden, welche einem Element des Ablaufdiagramms zugeordnet werden können. Ändern sich dann im Programmablauf beispielsweise Zustandsvariablen, oder werden Unterprogramme aufgerufen bzw. abgearbeitet, kann eine Zuordnung zu einem der Elemente des Ablaufdiagramms erfolgen. Diese Zuordnung erfolgt beispielsweise online, insbesondere in Echtzeit, oder im Nachgang, insbesondere durch die Nutzung eines Trace. Im Trace werden Daten zu Elementen im Ablaufdiagramm gespeichert um diese nach einer Programmabarbeitung auszuwerten. Die Elemente des Ablaufdiagramms können abhängig von Zustandsdaten des ablaufenden Programms oder des abgelaufenen Programms markiert werden. Zustandsdaten geben insbesondere an, welcher Punkt im Programm gerade abgearbeitet wird bzw. abgearbeitet worden ist. Durch die Abarbeitung können sich Zustandswerte (z.B. Variablen, Wahrheitswerte, oder dergleichen) ändern, welche auch darstellbar sind.

Elemente können durch Ovale, Rechtecke, Rauten, usw. beschrieben werden. Nach der DIN 66001 werden beispielsweise Start-Punkte, Stopp-Punkte, bzw. Grenzpunkte durch ein Oval beschrieben. Pfeile und Linien geben eine Verbindung zum nächstfolgenden Element an. Ein Rechteck stellt eine Operation dar, wobei ein Rechteck mit doppelten, vertikalen Linien einen Unterprogrammaufruf anzeigt. Mittels einer Raute ist eine Verzweigung beschrieben, wodurch eine Wahrheitsprüfung symbolisiert ist. Eingaben und Ausgaben sind beispielsweise als Parallelogramm darstellbar. Neben Start-Elementen, Stop-Elementen, Grenzpunkt-Elementen, Operations-Elementen, Elementen für den Aufruf bzw. die Abarbeitung eines oder mehrerer Unterprogramme, Verzweigungs-Elementen, Eingabe-Elementen bzw. Ausgabe-Elementen sind auch noch weitere Elemente in einem Ablaufdiagramm realisierbar.

In einer Ausgestaltung des Verfahrens ist das Programm ein zyklisches Programm. Gerade bei zyklischen Programmen ist es schwierig den jeweiligen Zustand des Programms darzustellen. Dies liegt insbesondere daran, dass die Taktraten der Prozessoren sehr hoch sind und es zyklische Programmabläufe gibt, welche in einer Sekunde vielfach durchlaufen werden. Hierbei kann beispielsweise die Auswertung über einen Trace (Informationsspeicher) helfen.

In einer Ausgestaltung des Verfahrens weist das Programm eine Vielzahl von Verzweigungen auf, d.h. zumindest zwei Verzweigungen. Wird in einem zyklischen Programmablauf eine Verzweigung mehrfach, d.h. immer wieder für eine längere Zeit (z.B. mehr als eine Sekunde) durchlaufen, so kann auch bei hohen Taktraten eine online Darstellung von Zuständen von Elementen des Ablaufdiagramms zu einer Aussage über die Programmabarbeitung führen. Werden beispielsweise gerade im Programmablauf abgearbeitete Elemente farbig markiert und wird dabei immer ein bestimmter Zweig nach einem Verzweigungspunkt (-Element) gewählt, so ist für einen Betrachter online in Echtzeit sichtbar, welche Zweige des Programms abgearbeitet werden bzw. auch nicht abgearbeitet werden. Dies ist auch dann möglich, wenn ein zyklisches Programm z.B. hunderte Mal pro Sekunde abgearbeitet wird. Wechselt die Abarbeitung verschiedener Zweige nur so oft, dass ein menschliches Auge dies auflösen kann (z.B. eine zehntel Sekunde, oder auch Minuten), so kann ein Betrachter auch online auf dem Ablaufdiagramm, dessen Elemente mit dem ablaufenden Programm datentechnisch verknüpft sind, sehen, in welchem Abarbeitungsschritt sich das Programm befindet und insbesondere auch welcher Abarbeitungszweig gerade genutzt wird.

Die Zustandsdaten nach denen zumindest einige Elemente des Ablaufdiagramms ihr graphisches Erscheinungsbild ändern, können nicht nur online aus einem ablaufenden Programm, sondern auch im Nachgang aus Tracedaten gewonnen werden. Mit dem Trace werden Daten aus dem ablaufenden Programm gespeichert.

Das graphische Erscheinungsbild kann beispielsweise durch eine oder mehrere der folgenden Maßnahmen geändert werde:
- Änderung der Farbe bei einem Element;
- Änderung einer Strichstärke bei einem Element;
- Änderung der Graustufe bei einem Element;
- Änderung der Beschriftung bei einem Element;
- Änderung der Farbsättigung bei einem Element;
- Blinken eines Elementes; und
- usw.

In einer Ausgestaltung des Verfahrens wird die Markierung länger angezeigt, als der Zustand vorliegt, durch welchen die Markierung veranlasst ist. Diese längere Anzeige kann vorteilhaft durch einen Anwender auch zeitlich eingestellt und verändert werden, so dass beispielsweise eine Zustandsänderung 1 Sekunde, 2 Sekunden, 3 Sekunden, usw. länger dargestellt wird, als diese vorliegt. Somit können auch kurzeitige Änderungen für einen Menschen besser dargestellt werden. Dies ist insbesondere bei Programmen vorteilhaft, bei welchen Zustandsdaten während einer Sekunde vielfach erneut berechnet werden und sich auch ändern können.

Das Programm, welches graphisch dargestellt wird, ist beispielsweise ein Teileprogramm einer Werkzeugmaschine. Gerade bei Werkzeugmaschinen gibt es in zyklischen Programmabläufen Verzweigungen, wobei es für einen Bediener der Werkzeugmaschine von Interesse ist zu erfahren, in welchem Zweig der Programmbearbeitung sich die Werkzeugmaschine gerade befindet. Der Zweig der Programmabarbeitung hängt dabei z.B. davon ab, welches Werkstück gerade bearbeitet wird. Durch die graphische Darstellung in Echtzeit kann der Bediener der Werkzeugmaschine erkennen, ob der richtige Programmzweig abgearbeitet wird.

Das beschriebene Verfahren ist ganz allgemein auch bei einem Programm zur Steuerung eines Bewegungsablaufes einsetzbar. Dies betrifft beispielsweise Bestückungsmaschinen, Schlauchbeutelmaschinen, Kräne, usw.

Die Erfindung sowie vorteilhafte Ausgestaltungen sind beispielhaft in Verbindung mit einer Figur, welche ein Ablaufdiagramm zeigt, nachfolgend beschrieben.

Die Figur zeigt ein Ablaufdiagramm 1. Ein Oval 3 gibt einen Startpunkt des dargestellten Programms an. Über eine Linie 12 erfolgt eine Verbindung zu einem nachfolgenden Element 4. Dieses Element 4 ist ein Rechteck und zeigt eine Operation an. Das Element 4 repräsentiert beispielsweise ein Zurücksetzen eines Ausgangs. Das Element 4 ist über die Verbindung 12 mit dem Element 15 verbunden. Das Element 15 ist eine Raute und symbolisiert eine Verzweigung. Wenn eine Bedingung wahr ist, so wird nachfolgend über die Wahr-Verbindung (true) 14 das Element 5 bearbeitet. Wenn eine Bedingung des Elements 15 als "falsch" (false) erkannt ist, so wird über die Falsch-Verbindung 13 das Element 6 bearbeitet. Durch das Verzweigungselement 15 ergeben sich folglich zwei Bearbeitungszweige. Ein erster Bearbeitungszweig 24 weist das Element 5 auf und ein zweiter Bearbeitungszweig 26 weist das Element 6 auf. Nur einer der beiden Zweige 25, 26 kann gleichzeitig durchlaufen werden. Mit den Elementen 5 und 6 lassen sich z.B. Ausgänge setzen. Das Element 5 des ersten Zweiges 24 setzt einen Ausgang A1 beispielsweise auf den Wert x und das Element 6 des zweiten Zweiges 25 setzt den Ausgang A1 beispielsweise auf den Wert y. Über eine Pfeilverbindung 22 und eine Linie werden die beiden Zweige 24, 25 vor dem Element 7 wieder zusammengeführt. Das Element 7 betrifft eine Achsfreigabeschaltung. Das Element 8 zur Eingabe von Befehlcode folgt dem Element 7 nach. Nach einer weiteren Abfrage einer Bedingung im Element 16 ergibt sich wieder eine Verzweigung, die zweite Verzweigung der Figur. Ein erster Zweig 26 dieser zweiten Verzweigung weist das Element 9 auf und der zweite Zweig 27 dieser zweiten Verzweigung weist das Element 10 auf. Wird die Bedingung des Elementes 16 als wahr (true) erkannt, wird das Element 9 abgearbeitet, welches z.B. eine Variablenzuweisung ist. Wird die Bedingung des Elementes 16 als falsch (false) erkannt, wird das Element 10 abgearbeitet, welches z.B. auch eine Variablenzuweisung ist. Beide Zweige 26 und 27 enden in einem Element 11, welches einen Unterprogrammaufruf darstellt. Aus der Darstellung in der Figur ist ersichtlich, dass die Elemente 4, 15, 6, 7 und 8 markiert sind. Der Pfad 25 wird also zumindest einmal oder auch zyklisch durchlaufen.

Gemäß eines Verfahrens zur Darstellung eines Programmablaufes ist beispielsweise in einem Engineeringsystem oder einem Diagnosesystem eine Funktionalität vorgesehen, mit welcher der Anwender insbesondere sequentiell abgearbeitete Programme graphisch mit Hilfe eines Ablaufdiagramms beobachtet. Abgearbeitete Befehle können im dargestellten Ablaufdiagramm eingefärbt werden. Werden bestimmte Verzweigungspfade immer wieder nacheinander durchlaufen, ergibt sich eine Art Spur aus welcher sich gewählte Verzweigungen ablesen lassen. In zyklisch abgearbeiteten Programmen stimmen unter Umständen die für einen Anwender sichtbaren Einfärbungen nicht mit dem tatsächlichen Programmablauf überein, da die zyklische Bearbeitung extrem schnell erfolgt und deswegen nur bedingt dargestellt werden kann. Ist allerdings eine gewisse Rückfärbeverzögerung vorgesehen (diese kann auch einstellbar sein: z.B. 0,5 sec, oder 3 sec.) so ist für einen Anwender eine Einfärbung auch dann noch sichtbar, wenn sich der Zustand längst geändert hat. Ein Anwender erkennt also, wenn z.B. ein Element in einem Ablaufdiagramm auch nur für einen Bruchteil einer Sekunde abgearbeitet wurde.

Gemäß der beschriebenen Verfahren ist es dem Anwender möglich bei einem grafischen Programm, das zyklisch abgearbeitet wird, eine Information darüber wie der Programmdurchlauf erfolgt zu erhalten. Dabei erhält der Anwender durch die visualisierte Information z.B. Hinweise darüber, wo es Sinn macht, weitere Funktionalitäten wie z.B. ein Statusprogramm einzuschalten.

In einer Ausgestaltung kann auch eine reduzierte Information über den grafischen Programmablauf mit in ein Ablaufsystem geladen und der Ablauf der grafischen Befehlsfolge im Ablaufsystem in Echtzeit in einem Speicher (Trace) aufgezeichnet werden. Diese Information wird an das Engineeringsystem zur Visualisierung zurückgegeben. Das Engineeringsystem färbt in der Grafik die durch eine CPU bearbeiteten grafischen Befehlsblöcke, welche Elemente des Ablaufdiagramms sind, entsprechend ein. Damit kann der Anwender auch bei schnell abgearbeiteten Programmen nachverfolgen, wie der tatsächliche Programmdurchlauf erfolgt. Durch eine Selektion von Programmelementen kann ein Anwender selbst entscheiden, welche Elemente eines Ablaufdiagramms er beobachten möchte. So können komplexe Abläufe auf wenige angezeigte und beobachtete Elemente reduziert werden.

In einer Ausgestaltung des Verfahrens bleiben einmal markierte Elemente markiert. Damit ergibt sich eine Art Leuchtspur, welche die Abarbeitung und die Verzweigungen zeigt. Durch eine Anwenderaktion kann die Markierung rückgesetzt werden, indem beispielsweise eine farbige Markierung wieder gelöscht wird.

Mit dem beschriebenen Verfahren zur Darstellung eines Programmablaufes ist eine Verfolgbarkeit einer zyklischen Bearbeitung von grafischen Programmen direkt in einer grafischen Programmdarstellung möglich. Durch grafische Einfärbung der durchlaufenen Programmschritte bzw. Programmblöcke kann eine Art Leuchtspur ausgebildet werden. Die Leuchtspur ergibt sich beispielsweise durch Farbintensivierung entsprechend der Häufigkeit im zyklischen Durchlauf. Auch kann eine spezifische Kennzeichnung von Einzeldurchläufen vorgesehen sein.

Durch die Aufzeichnung der Programmabarbeitung im Laufzeitsystem und der anschließenden Übertragung der Information an das Engineeringsystem wird der Gesamtablauf auch bei schneller Bearbeitung der grafischen Elemente/Befehlsblöcke durch Aufzeichnung in Echtzeit auch bei zyklischer Programmabarbeitung sichtbar. Durch die Einfärbung kann dann der Programmablauf in grafischen Programmen gut visualisiert werden.

## Patentansprüche

1. Verfahren zur Darstellung eines Programmablaufes, wobei das Programm graphisch als Ablaufdiagramm (1) dargestellt wird und Elemente (3,4,5,6,7,8,9,10,11,15,16) des Ablaufdiagramms (1) abhängig von Zustandsdaten des ablaufenden Programms oder des abgelaufenen Programms markiert werden.

2. Verfahren nach Anspruch 1, wobei das Programm ein zyklisches Programm ist.

3. Verfahren nach Anspruch 1, wobei das Programm eine Vielzahl von Verzweigungen (15,16) aufweist.

4. Verfahren nach einem der Ansprüche 1 bis 3, wobei die Zustandsdaten Tracedaten sind.

5. Verfahren nach einem der Ansprüche 1 bis 4, wobei die Markierung länger angezeigt wird als der Zustand vorliegt.

6. Verfahren nach einem der Ansprüche 1 bis 5, wobei das Programm ein Teileprogramm einer Werkzeugmaschine ist.

7. Verfahren nach einem der Ansprüche 1 bis 5, wobei das Programm ein Programm zur Steuerung eines Bewegungsablaufes ist.

8. Verfahren nach einem der Ansprüche 1 bis 7, wobei das Programm ein Programm ist, dessen Zustandsdaten während einer Sekunde vielfach erneut berechnet werden.

9. Verfahren nach einem der Ansprüche 1 bis 8, wobei das Programm zumindest eines der folgenden Elemente aufweist: ein Start-Element (3), ein Stop-Element, ein Grenzpunkte-Element, ein Operations-Element, ein Unterprogramm-Element (11), ein Verzweigungs-Element (15,16), ein Eingabe-Element bzw. ein Ausgabe-Element, wobei insbesondere ein Abschnitt des Ablaufdiagramms wählbar ist, und in diesem ausgewählten Abschnitt des Ablaufdiagramms Elemente (3, 4, 5, 6, 7, 8, 9, 10, 11, 15, 16) abhängig von Zustandsdaten verschieden dargestellt werden.
